# EUROPÄISCHE PATENTANMELDUNG

(11) **EP 1 645 846 A1**
(43) Veröffentlichungstag der Anmeldung: **12.04.2006**
(21) Anmeldenummer: 04024205.9
(22) Anmeldetag: 11.10.2004
(51) Int. Cl.: G01C 15/00

(54) **Geodätisches positionsbestimmungssystem**

(71) Anmelder: Leica Geosystems AG, 9435 Heerbrugg (CH)
(72) Erfinder: Green, Alastair, 9445 Rebstein (CH); Ruckdeschel, Jürgen, 9437 Marbach (CH); Streule, Josef, 9437 Maarbach (CH); Braun, Ralph, 9014 St. Gallen (CH); Sieber, Stefan, 9443 Widnau (CH)
(74) Vertreter: Kaminski, Susanne

(57) **Zusammenfassung**

Die Erfindung betrifft ein geodätisches Positionsbestimmungssystem zur Bestimmung der Position eines Zielpunkts (A) mit einem auf den Zielpunkt ausrichtbaren Lotstab (1), auf welchem ein Neigungssensor (2a) zum Erzeugen eines mit dem Neigungswinkel (α) des Lotstabs (1) verknüpften Neigungswinkelsignals (a) und ein Positionsbestimmungselement, insbesondere ein Reflektor (3) oder eine Satellitensignalantenne (4), angeordnet sind. Mittels Positionsbestimmungsmitteln, insbesondere einem Tachymeter (8) mit automatischer Zielverfolgung oder einer Satellitensignal-Auswerteeinheit (12), ist die Position (B) des Positionsbestimmungselements (3; 4) erfassbar. Erfindungsgemäss sind Auslösemittel (5a) vorgesehen, die mit dem Neigungssensor (2) und den Positionsbestimmungsmitteln.(8; 12) in Signalverbindung stehen und die derart ausgebildet sind, dass ein Auslösesignal (b) zum Erfassen der aktuellen Position (B) des Positionsbestimmungselements (3; 4) insbesondere über ein Übertragungssignal (c) an die Positionsbestimmungsmittel (8; 12) übermittelt wird, sobald das Neigungswinkelsignal (a) einem Neigungswinkel (α) entspricht, der innerhalb eines vorgegebenen Neigungswinkelbereichs (αₘₐₓ) liegt. Der in der Mitte (α₀) des vorgegebenen Neigungswinkelbereichs (αₘₐₓ) liegende Neigungswinkel (α) entspricht beispielsweise im Wesentlichen einer Ausrichtung des Lotstabs (1), bei welcher sich die Position (B) des Positionsbestimmungselements (3; 4) lotrecht zum Zielpunkt (A) befindet. Somit wird automatisch ein Erfassen der Position (B) des Positionsbestimmungselements (3; 4) bei im Wesentlichen lotrechter Ausrichtung des Lotstabs (1) ausgelöst.

## Beschreibung

Die Erfindung betrifft ein geodätisches Positionsbestimmungssystem zur Bestimmung der Position eines Zielpunkts mit einem auf den Zielpunkt ausrichtbaren Lotstab nach dem Oberbegriff des Anspruchs 1.

Ein derartiges Positionsbestimmungssystem ist beispielsweise aus der US 5,512,905 A bekannt. Beschrieben wird ein Lotstabsystem mit einem Lotstab, der auf einen insbesondere auf dem Boden befindlichen Zielpunkt positionierbar ist und an dessen oberem Ende sich ein Positionsbestimmungselement, das als ein Reflektor oder eine Satellitensignalantenne ausgebildet sein kann, befindet. Ausserdem sind ein Zwei-Achsen-Neigungssensor zum Erfassen des Neigungswinkels des Lotstabs und ein Richtungssensor, insbesondere ein Kompass, zum Erfassen der azimutalen Ausrichtung des Zwei-Achsen-Neigungssensor am Lotstab befestigt. Die Position des Zielpunkts wird vektoriell aus der Kenntnis der mittels eines Tachymeters bzw. Satellitensignalen ermittelten Position des Positionsbestimmungselements, des Neigungswinkels des Lotstabs, der azimutalen Ausrichtung des Zwei-Achsen-Neigungssensor und der Länge des Lotstabs ermittelt. Somit kann das bei konventionellen Systemen erforderliche lotrechte Ausrichten des Lotstabs entfallen. Ein Nachteil des beschriebenen Systems ist jedoch die Notwendigkeit der Kenntnis der azimutalen Ausrichtung des Lotstabs. Diese ist nicht mittels einer einzigen Satellitensignalantenne ermittelbar, weshalb ein Richtungssensor, vor allem ein kostspieliges Magnetkompasssystem, oder eine aufwendiges Satellitenpositionsbestimmungssystem mit mehreren Antennen zum Einsatz kommen muss. Derartige Systeme sind jedoch für die Anwendung in der Geodäsie nur bedingt geeignet, da sie teuer, störanfällig und für geodätische Zwecke zu ungenau sind und in Bereichen von Störmagnetfeldern - insbesondere in der Nähe von ferromagnetischen Gegenständen - oder Abschattungen nicht funktionieren. Positionsbestimmungsgenauigkeiten von unter 1 bis 2 Zentimeter sind mit dem beschrieben System nicht erzielbar.

In der US 5,929,807 A wird ein Verfahren und eine Vorrichtung zur Positionsbestimmung mittels eines GPS-Lotstabs vorgeschlagen, das weder einen Neigungssensor noch einen Richtungssensor erfordert. Der GPS-Lotstab wird mit dessen einem Ende auf einen Zielpunkt gesetzt und im Anschluss von dem Vermesser um diesen Zielpunkt geschwenkt, wobei stets ein Kontakt zwischen dem einen Ende des Lotstabs und dem Zielpunkt besteht. Während des Schwenkens des Lotstabs wird mittels der GPS-Antenne, die sich auf dem anderen Ende des Lotstabs befindet, eine Vielzahl an Positionspunkten erfasst. Da sich das andere Ende des Lotstabs durch das Schwenken auf einer virtuellen Kugeloberfläche bewegt, liegen die erfassten Positionspunkte ebenfalls auf einer virtuellen Kugeloberfläche, deren Mittelpunkt der Zielpunkt ist, so dass von der Vielzahl an erfassten Positionspunkten kalkulatorisch, beispielsweise durch die mathematische Analyse kleinster Quadrate, auf den Zielpunkt, um welchen der Lotstab geschwenkt wird, geschlossen werden kann. Um den Zielpunkt für geodätische Zwecke hochgenau bestimmen zu können, müssen die Positionspunkte jedoch in allen drei Koordinaten hochgenau erfasste werden, was mittels eines Satellitenpositionssystems nur bedingt möglich ist, da bei derartigen Systemen die vertikale Positionsbestimmungsgenauigkeit systembedingt wesentlich geringer als die horizontale Positionsbestimmungsgenauigkeit ist. Ein Schwenken des Lotstabs mit einem Neigungswinkel von etwa 20 Grad führt lediglich zu einer vertikalen Positionsbestimmungsgenauigkeiten von etwa 3 bis 4 Zentimeter.

Um die Position des Zentrums der Kugel und somit den Zielpunkt mit einer Genauigkeit von unter einem Zentimeter bestimmen zu können, müsste bei den üblichen Lotstablängen von etwa 2 Metern ein Schwenken um einen Schwenkwinkel von 90° erfolgen, so dass eine Halbkugel beschrieben wird. Dies ist jedoch schon aus Gründen der Ergonomie kaum realisierbar, so dass eine Positionsbestimmungsgenauigkeit von unter einem Zentimeter mittels des beschriebenen Verfahrens nicht möglich ist.

Eine Lösung dieses Problems wird in der US 2003/0058164 A1 vorgeschlagen, indem zusätzlich ein Neigungssensor am Lotstab befestigt wird und den während des Schwenkens erfassten Positionspunkten die jeweiligen Neigungswinkel des Lotstabs zugeordnet werden. Durch die hierdurch gewonnene weitere Grösse ist es möglich, die Positionsbestimmungsgenauigkeit zu erhöhen.

In der JP 2002/022443 A wird ein Verfahren beschrieben, das im Wesentlichen dem der US 5,929,807 A entspricht. Anstelle einer GPS-Antenne kommt jedoch als Positionsbestimmungselement ein von einem Tachymeter anzielbarer Reflektor zum Einsatz.

Ein gemeinsamer Nachteil der in der US 5,929,807 A, der US 2003/0058164 A1 und der JP 2002/022443 A beschriebenen Verfahren und Vorrichtungen besteht in der Notwendigkeit, eine Vielzahl an Einzelmessungen durchführen und die auf dieser Vielzahl basierende kalkulatorische Ermittlung des Zielpunkts mittels eines aufwendigen Rechenprozesses verarbeiten zu müssen. Dies ist einerseits zeitaufwendig und ergonomisch ungünstig, da der Lotstab von dem Vermesser für eine gewisse Zeit umhergeschwenkt werden muss. Andererseits bedarf die Auswertung hoher Rechenkapazitäten. Die beschriebenen Verfahren erfordern für Realzeitmessungen einen Eingriff in die Positionsdatenauswertungseinheit, beispielsweise in die GPS- oder Tachymeter-Auswerteeinheit, oder eine aufwendige Datennachbearbeitung, da aus den gewonnenen Positionsdaten des Positionsbestimmungselements, insbesondere der GPS-Antenne oder des Reflektors, die Position des Zielpunkts nicht ohne aufwendige mathematische Operationen bestimmbar ist. Dies ist vor allem bei modularen Systemen, bei denen unterschiedliche Module in unterschiedlichen Konfigurationen für mannigfache Messaufgaben zum Einsatz kommen, problematisch.

Aufgabe der Erfindung ist die Schaffung eines ergonomisch günstig bedienbaren, einfach aufgebauten, modular und kostengünstig realisierbaren, hochpräzisen geodätischen Lotstab-Positionsbestimmungssystems zur Bestimmung der Position eines Zielpunkts, das gegebenenfalls ebenso autark ohne die Verfügbarkeit eines Satellitensignals oder eines störungsfreien Erdmagnetfelds betreibbar ist und mittels welchem Fehlmessungen im Wesentlichen vermieden werden können, und die Verbesserung der aus dem Stand der Technik bekannten Lotstab-Positionsbestimmungssysteme.

Diese Aufgabe wird durch die Verwirklichung der kennzeichnenden Merkmale des unabhängigen Anspruchs gelöst. Merkmale, die die Erfindung in alternativer oder vorteilhafter Weise weiterbilden, sind den abhängigen Ansprüchen zu entnehmen.

Das erfindungsgemässe geodätische Positionsbestimmungssystem zur Bestimmung der Position eines Zielpunkts umfasst einen auf den Zielpunkt ausrichtbaren Lotstab, der vorzugsweise gerade lang gestreckt, möglicherweise jedoch alternativ leicht gekrümmt oder abgewinkelt ist, und unter welchem jede Art von ein- oder mehrstückigen Lot-, Flucht- oder Rover-Stäben konstanter oder variabler Länge zu verstehen ist. Derartige Lotstäbe weisen in der Regel eine Länge von etwa 2 Metern auf. Das Ausrichten auf den Zielpunkt erfolgt üblicherweise händisch durch Setzen des Lotstabs mit dessen insbesondere angespitztem unteren Ende auf den meist am Boden befindlichen Zielpunkt und anschliessendem Lotausrichten des Lotstabs durch Schwenken desselbigen um den Zielpunkt. Der Lotstab kann jedoch auch ohne Herstellen eines unmittelbaren Kontakts mit dem Zielpunkt auf nämlichen ausgerichtet werden, indem beispielsweise ein Fluchtstabstativ eingesetzt wird, mittels welchem der Lotstab schwebend auf den Zielpunkt ausgerichtet wird.

Ein Positionsbestimmungselement, insbesondere ein Reflektor oder eine Satellitensignalantenne, ist auf dem Lotstab, insbesondere auf demjenigen Ende des Lotstabs, das dem auf den Zielpunkt weisenden Ende gegenüber liegt, befestigt. Das Positionsbestimmungselement dient als Bezugselement für eine mittels Positionsbestimmungsmitteln durchgeführte Positionsmessung. In einer möglichen Ausführungsform wird das Positionsbestimmungselement von einer optisch anzielbaren Zielmarkierung, insbesondere einer Zieltafel oder einem Reflektor, beispielsweise einem Dreiseit- oder Fünfseitprisma oder einem Prismenkreuz, gebildet. Als Positionsbestimmungsmittel kommt in diesem Fall ein beabstandeter Tachymeter zum Einsatz, mittels welchem die Zielmarkierung insbesondere durch einen Laserstrahl anzielbar ist und somit die Position der Zielmarkierung zumindest relativ zum Tachymeter bestimmt werden kann. Der Tachymeter weist vorzugsweise eine automatische Zielverfolgung auf, so dass die Zielmarkierung in einem Bereitschaftsmodus ständig anvisiert wird. Anstelle eines Tachymeters können auch andere optische Vermessungsinstrumente, beispielsweise ein herkömmlicher Theodolit, ein Videotheodolit, eine Totalstation oder ein Nivellier, als Positionsbestimmungsmittel eingesetzt werden, weshalb erfindungsgemäss sämtliche Positionsbestimmungsmittel, mittels derer durch optisches Erfassen einer Zielmarkierung die Position eines Ziels bestimmbar ist, als Tachymeter gelten. In einer zweiten möglichen Ausführungsform ist das Positionsbestimmungselement als eine Satellitensignalantenne zum Empfang von Satellitensignalen, insbesondere von GPS-, GLONASS- oder Galileo-Satellitensignalen, ausgebildet. Die Positionsbestimmungsmittel sind in diesem Fall eine dem Lotstab zugeordnete Satellitensignal-Auswerteeinheit, die mit der Satellitensignalantenne in drahtgebundener oder drahtloser Signalverbindung steht und mittels welcher die Position der Satellitensignalantenne durch Auswertung der empfangenen Satellitensignale erfassbar ist. Die Satellitensignal-Auswerteeinheit ist beispielsweise direkt am Lotstab montiert oder befindet sich am Körper des Vermessers, z.B. an einem Tragegurt oder in dessen Rucksack.

Auf dem Lotstab ist ein Neigungssensor angeordnet, durch welchen die Neigung des Lotstabs relativ zur Lotachse erfasst wird. Neigungssensoren sind in unterschiedlichen Ausführungsformen aus dem Stand der Technik bekannt. Beispielsweise kann ein Pendelsystem, bei welchem die Lage eines gedämpften Pendelkörpers optisch mittels Fotodioden oder einer Codierrasterabtastung oder kapazitiv z.B. mittels eines Differenzkondensators erfasst wird, oder ein Flüssigkeitssystem mit optischer, kapazitiver oder widerstandsabhängiger Abtastung der Lage einer Blase einer Dosen- oder Röhrenlibelle oder der Oberfläche einer reflektierenden Flüssigkeit zum Einsatz kommen. Der Neigungssensor erzeugt direkt oder indirekt ein mit dem Neigungswinkel des Lotstabs zeitnah verknüpftes Neigungswinkelsignal, insbesondere in Form einer variablen Spannung, eines sich ändernden Widerstands oder einer sich ändernden Kapazität. Auch ein optisches Signal, das von einer Glasfaser geleitet wird, ist möglich. Abhängig vom eingesetzten Neigungssensor kann entweder lediglich der Neigungswinkel bezogen auf die Lotachse ohne dessen Ausrichtung oder ebenfalls die Richtung der Neigung um die Lotachse erfasst werden.

Der Neigungssensor steht erfindungsgemäss mit Auslösemitteln in drahtgebundener oder drahtloser Signalverbindung, die wiederum mit den Positionsbestimmungsmitteln in drahtgebundener oder drahtloser Signalverbindung stehen. Die Auslösemittel sind derart ausgebildet, dass ein Auslösesignal zum Erfassen der aktuellen Position des Positionsbestimmungselements an die Positionsbestimmungsmittel übermittelt wird, sobald das Neigungswinkelsignal einem Neigungswinkel entspricht, der innerhalb eines vorgegebenen Neigungswinkelbereichs liegt. Vorzugsweise entspricht der in der Mitte des vorgegebenen Neigungswinkelbereichs liegende Neigungswinkel einer Ausrichtung des Lotstabs, bei welcher sich die Position des Positionsbestimmungselements im Wesentlichen lotrecht zum Zielpunkt befindet. Dies ist bei einem zentrisch angeordneten Positionsbestimmungselement im Falle einer lotrechten Ausrichtung des Lotstabs der Fall. Jedoch ist es ebenfalls realisierbar, das Positionsbestimmungselement ausserhalb der Achse des Lotstabs anzuordnen, so dass eine bestimmte Schrägstellung des Lotstabs in eine bestimmte Richtung einer lotrechten Ausrichtung des Positionsbestimmungselements über dem Zielpunkt entspricht. In diesem Fall ist es entweder möglich, den Neigungssensor entsprechend ausgerichtet auf dem Lotstab zu montieren oder einen Neigungssensor, mittels welchem ebenfalls die Ausrichtung des Neigungswinkels gemessen werden kann, einzusetzen.

Sobald das Auslösesignal von den Auslösemitteln abgegeben wird, wird gleichzeitig entweder eine momentane Position des Positionsbestimmungselements erfasst, insbesondere angezeigt und/oder gespeichert, oder es werden während des Anliegens des Auslösesignals mehrere Positionseinzelmessungen hintereinander gespeichert, die in einem darauf folgenden Schritt, insbesondere nach Speicherung einer bestimmten Anzahl an Messungen und/oder nach Abbrechen des Auslösesignals aufgrund des Verlassens der Lotrechtausrichtung des Lotstabs, weiterverarbeitet werden, indem beispielsweise ein Mittelwert gebildet wird und dieser Mittelwert als Ergebnis der Positionsmessung ausgegeben und/oder gespeichert wird.

Die Auslösemittel können von einer elektrischen Schaltung oder einem von einer Prozessoreinheit verarbeitbaren Algorithmus, der beispielsweise auf einem Speichermedium gespeichert ist, gebildet werden. Die Auslösemittel sind somit als abstraktes Funktionselement zu verstehen, das nicht zwangsläufig die Form einer separaten physischen Einheit haben muss, sondern ein abstrakter Funktionsalgorithmus sein kann. Sie können auch Bestandteil des Neigungssensors, der Positionsbestimmungsmittel oder weiterer Komponenten sein.

Mittels der Erfindung entfällt das mühsame manuelle Auslösen des Messvorgangs durch den Vermesser, da das Erfassen der Position automatisch bei insbesondere lotrechter Ausrichtung des Lotstabs ausgelöst wird. Fehler durch Verändern der Ausrichtung des Lotstabs bei Auslösen der Messung beispielsweise durch Betätigen eines am Lotstab montierten Tasters werden somit vermieden.

Die Bereitschaft zur Durchführung einer Messung kann von dem Vermesser durch Betätigen einer Bereitschaftstaste signalisiert werden. In dem darauf folgenden Schritt richtet der Vermesser den Lotstab beispielsweise mittels einer herkömmlichen Libelle oder einer mit dem Neigungssensor verknüpften Neigungsanzeige insbesondere lotrecht aus. Sobald der Neigungswinkel des Lotstabs innerhalb des vorgegebenen Winkelbereichs liegt, wird die Position zeitnah automatisch erfasst. Um Messfehler zu vermeiden, ist es möglich, die Auslösemittel derart auszubilden, dass erst nach Verstreichen einer vorgegebenen Zeit, innerhalb welcher sich der Neigungswinkel im vorgegebenen Neigungswinkelbereich befindet, das Auslösesignal ausgegeben wird. Hierdurch wird vermieden, dass bei übermässig schnellem Schwenken des Lotstabs und schnellem Durchlaufen des Neigungswinkelbereichs ein Auslösesignal ausgegeben wird. Denn dies könnte aufgrund der zwangsläufig vorhandenen, wenn auch unerwünschten und daher möglichst gering zu haltenden Zeitverzögerung zwischen dem Durchlaufen des Winkelbereichs und dem Erfassen der Position zu einer Fehlmessung führen. Daher ist vorzugsweise ein Neigungssensor mit einer möglichst geringen Trägheit zu wählen. Ausserdem sollten die Auslösemittel und die Positionsbestimmungsmittel einschliesslich der jeweiligen drahtgebundenen oder drahtlosen Signalverbindungen ein zeitnahes Erfassen der Position nach Erreichen des Neigungswinkelbereichs ermöglichen. Um Messfehler zu verhindern, die auf die unvermeidbare Systemträgheit zurückzuführen sind, ist es ausserdem möglich, die Schwenkgeschwindigkeit, die sich aus der Änderung des Neigungswinkels ergibt, zu erfassen und ein Auslösesignal dann zu unterbinden, wenn die Schwenkgeschwindigkeit eine vorgegeben Grenze überschreitet, ab welcher die Zeitverzögerung zwischen realem Neigungswinkelbereichsdurchlauf und der Erfassung der Position zu einer unerwünscht grossen Diskrepanz führen könnte. Der Neigungswinkelbereich und die genannten Massnahmen zur Vermeidung von Fehlmessungen sind in Abhängigkeit von der gewünschten Messgenauigkeit zu wählen und können gegebenenfalls vom Vermesser angepasst werden. So ist der vorgegebenen Neigungswinkelbereich z.B. bei einer Positionsbestimmung mittels Satelliten in der Regel grösser zu wählen als bei einer optischen Messung mittels eines Tachymeters, da mit letzterem in der Regel wesentlich höhere Messgenauigkeiten erzielbar sind. Im Falle eines grossen Neigungswinkelbereichs sinkt die Messgenauigkeit, da insbesondere bei nicht exakter Lotausrichtung des Lotstabs ein Erfassen der Position ausgelöst wird. Jedoch sind in diesem Fall innerhalb kürzerer Zeit Messergebnisse erzielbar, da der Neigungswinkelbereich schneller vom Vermesser aufgefunden wird.

Das erfindungsgemässe geodätische Positionsbestimmungssystem wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein geodätisches Positionsbestimmungssystem mit einem von einem Tachymeter anzielbaren Reflektor und am Lotstab angeordneten Auslösemitteln;
- Fig. 2: ein geodätisches Positionsbestimmungssystem mit einem von einem Tachymeter anzielbaren Reflektor und im Tachymeter integrierten Auslösemitteln;
- Fig. 3: ein geodätisches Positionsbestimmungssystem mit einem von einem Tachymeter anzielbaren Reflektor und Auslösemitteln, die in einer am Lotstab angeordneten Fernbedieneinheit integriert sind;

- Fig. 4: ein geodätisches Positionsbestimmungssystem mit einer Satellitensignalantenne, einer am Lotstab angeordneten Satellitensignal-Auswerteeinheit und am Lotstab angeordneten Auslösemitteln; und
- Fig. 5: ein geodätisches Positionsbestimmungssystem mit einer Satellitensignalantenne mit integriertem Neigungssensor und einer am Lotstab angeordneten Satellitensignal-Auswerteeinheit mit integrierten Auslösemitteln und einer Korrekturdaten-Empfangseinheit.

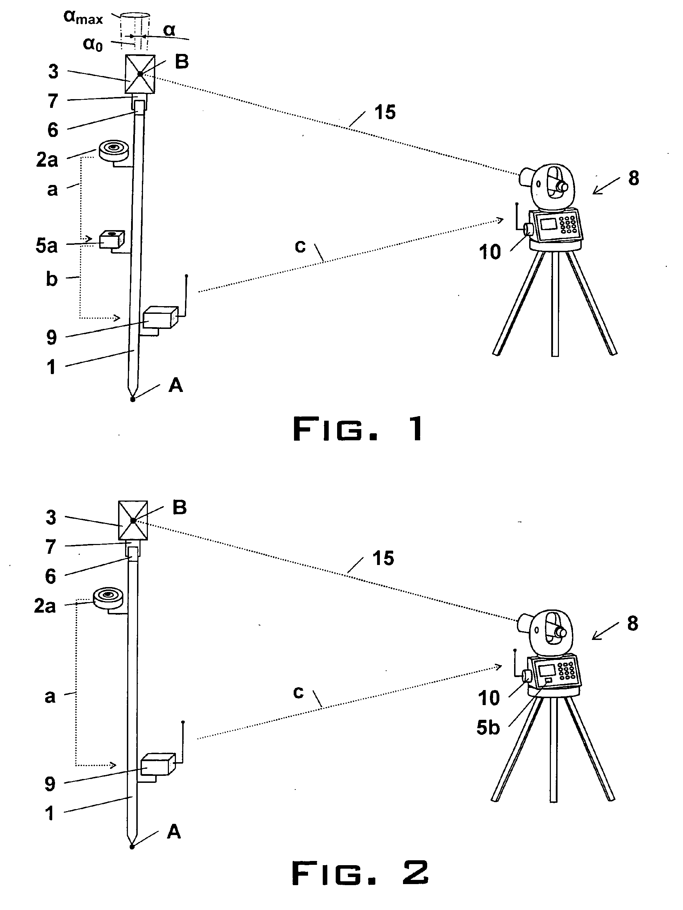

In Fig. 1 ist eine erste mögliche Ausführungsform des erfindungsgemässen geodätischen Positionsbestimmungssystems dargestellt. Ein Lotstab 1 ist mit dessen unterem Ende auf einen Zielpunkt A gerichtet. Auf dem oberen Ende des Lotstabs 1 befindet sich als Positionsbestimmungselement ein Reflektor 3 in einer Position B. Die Verbindung zwischen dem Lotstab 1 und dem Reflektor 3 erfolgt über aufeinander abgestimmte, lösbare Zwangszentrierungen 6 und 7, die es ermöglichen, den Reflektor 3 vom Lotstab 1 abzunehmen und insbesondere gegen ein anderes Positionsbestimmungselement auszutauschen. Der Reflektor 3 ist mittels eines vom Lotstab 1 beabstandeten Tachymeters 8 über einen Laserstrahl 15 anzielbar, wodurch die Position des Reflektors 3 relativ zu der des Tachymeters 8 erfassbar ist. Auf dem Lotstab 1 ist ein Neigungssensor 2a montiert, der ein mit dem Neigungswinkel α des Lotstabs 1 verknüpftes Neigungswinkelsignals a erzeugt. Der Neigungswinkel α wird in diesem Fall von der Lotrechten aus gemessen. Ausserdem sind Auslösemittel 5a am Lotstab 1 angeordnet, die von einem Elektronikbaustein gebildet werden und die mit dem Neigungssensor 2a in drahtgebundener Signalverbindung stehen, so dass ihnen das Neigungswinkelsignals a zugeführt wird. Die Auslösemittel 5a sind derart ausgebildet, dass ein Auslösesignal b zum Erfassen der aktuellen Position B des Reflektors 3 erzeugt wird, sobald das Neigungswinkelsignal a einem Neigungswinkel α entspricht, der innerhalb eines vorgegebenen Neigungswinkelbereichs αₘₐₓ liegt. Die Mitte α₀ des vorgegebenen Neigungswinkelbereichs αₘₐₓ und in diesem Fall gleichzeitig die Bezugsachse für den Neigungswinkel α entspricht einer Ausrichtung des Lotstabs 1, bei welcher sich die Position B des Reflektors 3 lotrecht zum Zielpunkt A befindet und der Lotstab 1 aufgrund der zentrischen Anordnung des Reflektors 3 auf dem Lotstab 1 gleichzeitig lotrecht ausgerichtet ist. Das von den Auslösemitteln 5a abgegebene Auslösesignal b wird über eine drahtgebundene Signalverbindung einer an dem Lotstab 1 angeordneten Signalübermittlungseinrichtung 9 zugeführt, die ein Übertragungssignal c, das mit dem Auslösesignal b verknüpft ist, aussendet. Das Übertragungssignal c wird von einer Signalempfangseinrichtung 10, die am Tachymeter 8 angeordnet ist und mit diesem in drahtgebundener Signalverbindung steht, empfangen, so dass eine drahtlose Signalverbindung zwischen der Signalübermittlungseinrichtung 9 und der Signalempfangseinrichtung 10 besteht. Unmittelbar nachdem der Lotstab 1 derart ausgerichtet ist, dass der Neigungswinkel α innerhalb des Neigungswinkelbereichs αₘₐₓ liegt und die Auslösemittel 5a das Auslösesignal b abgeben, das dem Tachymeter 8 zugeführt wird, wird die aktuelle Position B des Reflektors 3, der von dem Tachymeter 8 per automatischer Zielverfolgung im Bereitschaftsmodus ständig angezielt wird, erfasst und gespeichert. Aufgrund der automatischen Zielverfolgung des Tachymeters 8 bedarf es nur eines einzigen Vermessers, dessen einzige Aufgabe während einer Vermessungssession das Positionieren des Lotstabs 1 auf dem Zielpunkt A und das lotrechte Ausrichten des Lotstabs 1 ist. Aus den somit erfassten und gespeicherten Koordinaten kann aus der Kenntnis des Abstands zwischen der Position B des Reflektors 3 und dem Zielpunkt A leicht die Position des Zielpunkts A berechnet werden.

Fig. 2 zeigt eine zweite Ausführungsform des erfindungsgemässen geodätischen Positionsbestimmungssystems. Die Auslösemittel sind hier nicht wie in der ersten Ausführungsform von Fig. 1 am Lotstab 1, sondern am Tachymeter 8 angeordnet. Der das Neigungswinkelsignal a abgebende Neigungssensor 2a steht mit der Signalübermittlungseinrichtung 9 in drahtgebundener Signalverbindung. Das von der Signalübermittlungseinrichtung 9 ausgesendete Übertragungssignal c ist somit mit dem Neigungswinkelsignal a verknüpft. Die Signalempfangseinrichtung 10 des Tachymeters 8 empfängt somit drahtlos das Übertragungssignal c mit dem Neigungswinkelsignal a, das dem Tachymeter 8 zugeführt wird. In dem Tachymeter 8 sind die Auslösemittel 5b in Form einer Schaltung oder eines von dem Tachymeter 8 verarbeitbaren, beispielsweise auf einem Speicherbaustein gespeicherten Algorithmus integriert. Das Erfassen der Position B des Reflektors 3 bei lotrechter Ausrichtung erfolgt automatisch wie oben beschreiben über die Auslösemittel 5b.

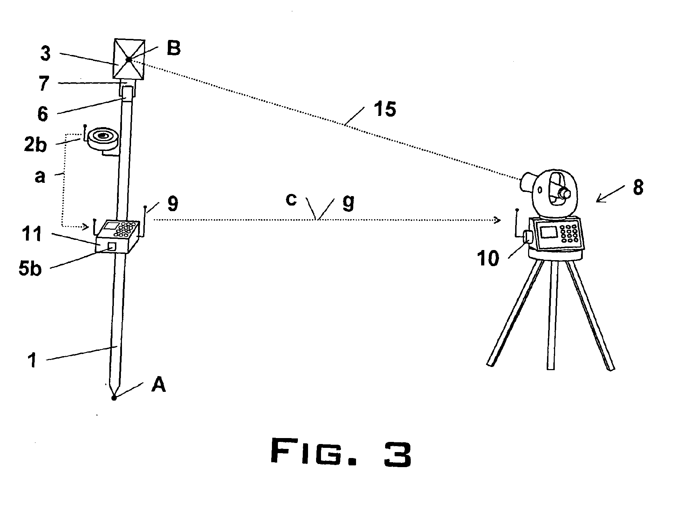

Eine weitere mögliche, dritte Ausführungsform des erfindungsgemässen geodätischen Positionsbestimmungssystems zeigt Fig. 3, in welcher sich ein Neigungssensor 2b und eine Fernbedieneinheit 11 auf dem Lotstab 1 befinden. Zwischen dem Neigungssensor 2b und der Fernbedieneinheit 11 besteht eine drahtlose Signalverbindung, beispielsweise nach dem Bluetooth-Standard, über welche das Neigungswinkelsignal a der Fernbedieneinheit 11 zugeführt wird. Die Fernbedieneinheit 11 besitzt eine integrierte Signalübermittlungseinrichtung 9, über welche sie in drahtloser Signalverbindung mit der Signalempfangseinrichtung 10 des Tachymeters 8 steht. Der Tachymeter 8 ist somit über Fernsteuersignale g fernbedienbar.

In der Fernbedieneinheit 11 sind die Auslösemittel 5b in Form einer Schaltung oder eines von der Fernbedieneinheit 11 verarbeitbaren, insbesondere auf einem Speicherbaustein gespeicherten Algorithmus integriert. Das von den Auslösemitteln 5b abgegebene Auslösesignal b wird über das Übertragungssignal c an den Tachymeter 8 drahtlos übermittelt. Selbstverständlich kann dieses über das Übertragungssignal c übermittelte Auslösesignal b Bestandteil der Fernsteuersignale g sein. Diese Ausführungsform eignet sich besonders für eine Einmann-Vermessung, da ein am Lotstab befindlicher Vermesser mittels der Fernbedieneinheit 11 alle wesentlichen Funktionen des vorzugsweise mit automatischer Zielverfolgung ausgestatteten Tachymeters 8 fernsteuern kann und die Fernbedieneinheit 11 durch die integrierten Auslösemittel 5b das Erfassen der Position B des Reflektors 3 automatisch auslöst.

Fig. 4 stellt eine vierte Ausführungsform der Erfindung dar, bei welcher als Positionsbestimmungselement eine Satellitensignalantenne 4, die über aufeinander abgestimmte Zwangszentrierungen 6 und 7 abnehmbar auf dem Lotstab 1 montiert ist, zum Einsatz kommt. Das Antennenzentrum der Satellitensignalantenne 4 wird durch die Position B gekennzeichnet. Über die Satellitensignalantenne 4 werden Satellitensignale d, insbesondere GPS-, GLONASS- oder Galileo-Satellitensignale, empfangen. Die empfangenen Satellitensignale e werden per drahtgebundene Signalverbindung einer am Lotstab 1 montierten Satellitensignal-Auswerteeinheit 12 zugeführt, mittels welcher in aus dem Stand der Technik bekannter Weise die Position B der Satellitensignalantenne 4 durch Auswertung der empfangenen Satellitensignale e erfasst werden kann. Auf dem Lotstab 1 ist ausserdem der Neigungssensor 2a fest montiert, der das Neigungswinkelsignal a erzeugt, das per drahtgebundener Signalverbindung zu den Auslösemitteln 5a gelangt. Das Auslösesignal b, das bei lotrechter Ausrichtung des Lotstabs 1 ausgesendet wird, wird der Satellitensignal-Auswerteeinheit 12 zugeführt. Sobald das Auslösesignal b anliegt, wird die Position B in Form der gemessenen Positionskoordinaten der Satellitensignalantenne 4 erfasst und gespeichert. Um Messfehler zu vermeiden, wird während des Anliegens des Auslösesignals b eine Vielzahl aktueller Positionen B der Satellitensignalantenne 4 erfasst und ein Mittelwert der erfassten Vielzahl aktueller Positionen B gebildet, nachdem entweder eine bestimmte Anzahl an erfassten Messungen erfolgt ist, das Auslösesignal b unterbrochen wurde oder die Messung durch den Vermesser beendet wurde.

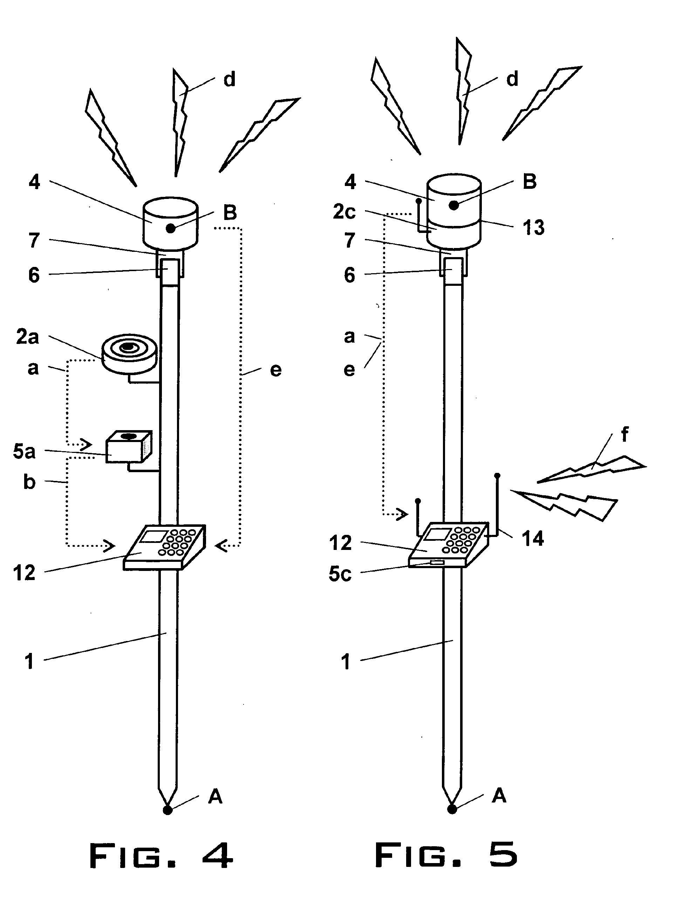

Eine Alternative zur vierten Ausführungsform aus Fig. 4 zeigt die Fig. 5 in Form einer fünften erfindungsgemässen Ausführungsform. Auf dem Lotstab 1 sind am oberen Ende mittels der Zwangszentrierungen 6 und 7 die Satellitensignalantenne 4 und ein Neigungssensor 2c angeordnet, die in einem gemeinsamen Gehäuse 13 untergebracht sind. Diese Einheit befindet sich in einer drahtlosen Signalverbindung, insbesondere nach dem Bluetooth-Standard, mit der Satellitensignal-Auswerteeinheit 12, welcher hierdurch das Neigungswinkelsignal a und die empfangenen Satellitensignale e zugeführt werden. In der Satellitensignal-Auswerteeinheit 12 sind Auslösemittel 5c in Form einer Schaltung oder eines von der Satellitensignal-Auswerteeinheit 12 verarbeitbaren, insbesondere auf einem Speicherbaustein gespeicherten Algorithmus integriert. Ausserdem weist die Satellitensignal-Auswerteeinheit 12 eine Korrekturdaten-Empfangseinheit 14 auf, mittels welcher Korrektursignale f, insbesondere von RTK-Signalen oder DGPS-Signalen, zur Erhöhung der Bestimmungsgenauigkeit der Position B der Satellitensignalantenne 4 - wie aus dem Stand der Technik bekannt - empfangen werden. Das Erfassen der Position B erfolgt in der oben beschriebenen Weise, wobei aufgrund der lotrechten Ausrichtung des Lotstabs 1 aus der Kenntnis des Abstand zwischen der Position B der Satellitensignalantennen 4 und der des Zielpunkts A unmittelbar, vorzugsweise automatisch durch die Satellitensignal-Auswerteeinheit 12, die Position des Zielpunkts A berechnet werden kann.

## Patentansprüche

1. Geodätisches Positionsbestimmungssystem zur Bestimmung der Position eines Zielpunkts (A), mit
• einem auf den Zielpunkt (A) ausrichtbaren Lotstab (1),
• einem auf dem Lotstab (1) - gegebenenfalls lösbar - angeordneten Neigungssensor (2a; 2b; 3c) zum Erzeugen eines mit dem Neigungswinkel (α) des Lotstabs (1) verknüpften Neigungswinkelsignals (a),
• einem auf dem Lotstab (1) angeordneten Positionsbestimmungselement, insbesondere einem Reflektor (3) oder einer Satellitensignalantenne (4), und
• Positionsbestimmungsmitteln (8; 12), durch welche die Position (B) des Positionsbestimmungselements (3; 4) in - Abhängigkeit von dem Neigungswinkelsignal (a) erfassbar ist,
**gekennzeichnet durch**
Auslösemittel (5a; 5b; 5c), die mit dem Neigungssensor (2) und den Positionsbestimmungsmitteln (8; 12) in Signalverbindung stehen und die derart ausgebildet sind, dass ein Auslösesignal (b) zum Erfassen der aktuellen Position (B) des Positionsbestimmungselements (3; 4) an die Positionsbestimmungsmittel (8; 12) übermittelt wird, sobald das Neigungswinkelsignal (a) einem Neigungswinkel (α) entspricht, der innerhalb eines vorgegebenen Neigungswinkelbereichs (αₘₐₓ) liegt.

2. Geodätisches Positionsbestimmungssystem nach Anspruch 1,
**dadurch gekennzeichnet, dass**
der in der Mitte (α₀) des vorgegebenen Neigungswinkelbereichs (αₘₐₓ) liegende Neigungswinkel (α) einer Ausrichtung des Lotstabs (1) entspricht, bei welcher sich die Position (B) des Positionsbestimmungselements (3; 4) im Wesentlichen lotrecht zum Zielpunkt (A) befindet.

3. Geodätisches Positionsbestimmungssystem nach Anspruch 1 oder 2, **dadurch gekennzeichnet, dass**
der Lotstab (1) und das Positionsbestimmungselement (3; 4) mit aufeinander abgestimmten lösbaren Zwangszentrierungen (6, 7) versehen sind, so dass das Positionsbestimmungselement (3; 4) vom Lotstab (1) abnehmbar und insbesondere gegen ein anderes Positionsbestimmungselement (3; 4) austauschbar ist.

4. Geodätisches Positionsbestimmungssystem nach einem der Ansprüche 1 bis 3, **dadurch gekennzeichnet, dass** die Positionsbestimmungsmittel (8; 12) derart ausgebildet sind, dass während des Anliegens des Auslösesignals (b) eine Vielzahl aktueller Positionen (B) des Positionsbestimmungselements (3; 4) erfasst und ein Mittelwert der erfassten Vielzahl aktueller Positionen (B) gebildet wird.

5. Geodätisches Positionsbestimmungssystem nach einem der Ansprüche 1 bis 4, **dadurch gekennzeichnet, dass**
• das Positionsbestimmungselement als ein Reflektor (3) ausgebildet ist und
• die Positionsbestimmungsmittel als ein vom Lotstab (1) beabstandeter - insbesondere eine automatische Zielverfolgung aufweisender - Tachymeter (8), mittels welchem der Reflektor (3) insbesondere durch einen Laserstrahl (15) anzielbar ist und die Position (B) des Reflektors (3) bestimmbar ist, ausgebildet sind.

6. Geodätisches Positionsbestimmungssystem nach Anspruch 5,
**gekennzeichnet durch**
• eine dem Lotstab (1) zugeordnete, insbesondere an diesem angeordnete Signalübermittlungseinrichtung (9) zumindest zur Übermittlung eines mit dem Neigungswinkelsignal (a) oder dem Auslösesignal (b) verknüpften Übertragungssignals (c) über eine drahtlose Signalverbindung und
• eine dem Tachymeter (8) zugeordnete und mit diesem in Signalverbindung stehende Signalempfangseinrichtung (10) zum Empfangen des Übertragungssignals (c).

7. Geodätisches Positionsbestimmungssystem nach Anspruch 6,
**dadurch gekennzeichnet, dass**
• die Auslösemittel (5a) an dem Lotstab (1) angeordnet sind und mit der Signalübermittlungseinrichtung (9) in Signalverbindung stehen, und
• das Übertragungssignal (c) mit dem Auslösesignal (b) verknüpft ist.

8. Geodätisches Positionsbestimmungssystem nach Anspruch 6 oder 7, **dadurch gekennzeichnet, dass**
die Auslösemittel (5b) in einer dem Lotstab (1) zugeordneten - insbesondere an diesem angeordneten - Fernbedieneinheit (11), mittels welcher der Tachymeter (8) über die Signalübermittlungseinrichtung (9) und die Signalempfangseinrichtung (10) - insbesondere durch Fernsteuersignale (g) - fernbedienbar ist, in Form einer Schaltung oder eines von der Fernbedieneinheit (11) verarbeitbaren Algorithmus integriert sind.

9. Geodätisches Positionsbestimmungssystem nach Anspruch 6,
**dadurch gekennzeichnet, dass**
• der Neigungssensor (2a, 2b) mit der Signalübermittlungseinrichtung (9) in Signalverbindung steht,
• das Übertragungssignal (c) mit dem Neigungswinkelsignal (a) verknüpft ist und
• die Auslösemittel (5a, 5b) in dem Tachymeter (8) in Form einer Schaltung oder eines von dem Tachymeter (8) verarbeitbaren Algorithmus integriert sind.

10. Geodätisches Positionsbestimmungssystem nach einem der Ansprüche 1 bis-4, **dadurch gekennzeichnet, dass**
• das Positionsbestimmungselement als eine Satellitensignalantenne (4) zum Empfang von Satellitensignalen (d), insbesondere von GPS-, GLONASS- oder Galileo-Satellitensignalen, ausgebildet ist und
• die Positionsbestimmungsmittel als eine dem Lotstab (1) zugeordnete - insbesondere an diesem angeordnete - Satellitensignal-Auswerteeinheit (12), die mit der Satellitensignalantenne (4) in Signalverbindung steht und mittels welcher die Position (B) der Satellitensignalantenne (4) durch Auswertung der empfangenen Satellitensignale (e) erfassbar ist, ausgebildet sind.

11. Geodätisches Positionsbestimmungssystem nach Anspruch 10,
**dadurch gekennzeichnet, dass**
der Neigungssensor (2c) mit der Satellitensignal-Auswerteeinheit (12) in Signalverbindung steht und die Auslösemittel (5c) in der Satellitensignal-Auswerteeinheit (12) in Form einer Schaltung oder eines von der Satellitensignal-Auswerteeinheit (12) verarbeitbaren Algorithmus integriert sind.

12. Geodätisches Positionsbestimmungssystem nach Anspruch 10 oder 11, **dadurch gekennzeichnet, dass** der Neigungssensor (2c) in einem gemeinsamen Gehäuse (13) mit der Satellitensignalantenne (4) angeordnet ist.

13. Geodätisches Positionsbestimmungssystem nach einem der Ansprüche 10 bis 12, **gekennzeichnet durch** eine der Satellitensignal-Auswerteeinheit (12) zugeordnete, mit dieser in Signalverbindung stehenden - insbesondere an dem Lotstab (1) angeordnete - Korrekturdaten-Empfangseinheit (14) zum Empfang von Korrektursignalen (f), insbesondere von RTK-Signalen oder DGPS-Signalen, zur Erhöhung der Bestimmungsgenauigkeit der Position (B) der Satellitensignalantenne (4).

14. Lotstab-System zur Verwendung in einem geodätischen Positionsbestimmungssystem nach einem der Ansprüche 1 bis 13, **gekennzeichnet durch**
• einen auf einen Zielpunkt (A) ausrichtbaren Lotstab (1),
• einen auf dem Lotstab (1) angeordneten Neigungssensor (2a, 2b, 2c) zum Erzeugen eines mit dem Neigungswinkel (α) des Lotstabs (1) verknüpften Neigungswinkelsignals (a),
• ein auf dem Lotstab (1) angeordnetes Positionsbestimmungselement, insbesondere einen Reflektor (3) oder eine Satellitensignalantenne (4), und
• aufeinander abgestimmte Zwangszentrierungen (6, 7) an dem Lotstab (1) und dem Positionsbestimmungselement (3; 4), mittels derer das Positionsbestimmungselement (3; 4) - gegebenenfalls lösbar - koaxial mit dem Lotstab (1) verbunden ist.

15. Lotstab-System nach Anspruch 14, **dadurch gekennzeichnet, dass** das Positionsbestimmungselement als ein Reflektor (3) ausgebildet ist.

16. Lotstab-System nach Anspruch 14, **dadurch gekennzeichnet, dass** das Positionsbestimmungselement als eine Satellitensignalantenne (4) zum Empfang von Satellitensignalen (d), insbesondere von GPS-, GLONASS- oder Galileo-Satellitensignalen, ausgebildet ist.
